# EUROPEAN PATENT APPLICATION

(11) **EP 4 303 800 A1**
(43) Date of publication of application: **10.01.2024**
(21) Application number: 21929177.0
(22) Date of filing: 05.11.2021
(51) Int. Cl.: G06Q 30/02

(54) **METHOD, COMPUTER, AND SYSTEM**

(30) Priority: 05.03.2021 JP 2021035783
(71) Applicant: BRIDGESTONE CORPORATION, Chuo-ku Tokyo 104-8340 (JP)
(72) Inventor: HASHIMOTO Shouichi, Tokyo 104-8340 (JP); SASABE Toshihiko, Tokyo 104-8340 (JP); KIKUMORI Tomomi, Tokyo 104-8340 (JP); KASAI Yosuke, Tokyo 104-8340 (JP)
(74) Representative: Marks & Clerk LLP
(86) International application number: PCT/JP2021/040860
(87) International publication number: WO 2022/185617

(57) **Abstract**

A method executed by a computer, including: executing multiple times a first process of outputting question information to a user and acquiring response information from the user; executing a second process at least once while executing the first process multiple times; executing a third process of estimating a vehicle use and customer value for the user and specifying one or more tire products to recommend to the user based on two or more pieces of the response information acquired; and outputting information indicating the vehicle use and the customer value estimated and information regarding the one or more tire products specified. The second process includes determining a comprehension level of the user regarding a tire product, based on one or more pieces of the response information acquired, and determining question information to be output next time and thereafter, according to the comprehension level determined.

## Description

### TECHNICAL FIELD

The present disclosure relates to a method, a computer, and a system.

### BACKGROUND

Techniques for recommending automotive tire products to customers are conventionally known. For example, Patent Literature (PTL) 1 describes evaluation points corresponding to selected evaluation items accumulated for each tire to obtain a total score for each tire, and determining one or more tires to be recommended based on a ranking of the total scores.

### CITATION LIST

### Patent Literature

PTL 1: JP 2016-51311 A

### SUMMARY

### (Technical Problem)

There was room for improvement in techniques used to recommend automotive tire products to customers.

In view of the circumstances, it would be helpful to improve on techniques recommending automotive tire products to customers.

### (Solution to Problem)

A method according to an embodiment of the present disclosure is,
a method executed by a computer, the method comprising: executing multiple times a first process of outputting question information to a user and acquiring response information to the question information from the user; executing a second process at least once while executing the first process multiple times; executing a third process of estimating a vehicle use and customer value for the user and specifying one or more tire products to recommend to the user based on two or more pieces of the response information acquired by executing the first process multiple times; and outputting information indicating the vehicle use and the customer value estimated and information regarding the one or more tire products specified, wherein the second process includes determining a comprehension level of the user regarding a tire product, based on one or more pieces of the response information acquired, and determining question information to be output next time and thereafter, according to the comprehension level determined.

A computer according to an embodiment of the present disclosure is,
a computer comprising a controller, wherein the controller is configured to: execute multiple times a first process of outputting question information to a user and acquiring response information to the question information from the user; execute a second process at least once while executing the first process multiple times; execute a third process of estimating a vehicle use and customer value for the user and specifying one or more tire products to recommend to the user based on two or more pieces of the response information acquired by executing the first process multiple times; and output information indicating the vehicle use and customer value estimated and information regarding the one or more tire products specified, wherein the second process includes determining a comprehension level of the user regarding a tire product, based on one or more pieces of the response information acquired, and determining question information to be output next time and thereafter, according to the comprehension level determined.

A system according to an embodiment of this disclosure is,
a system comprising a terminal device and an information processing device, wherein the terminal device or the information processing device is configured to: execute multiple times a first process of outputting question information to a user and acquiring response information to the question information from the user; execute a second process at least once while executing the first process multiple times; execute a third process of estimating a vehicle use and customer value for the user and specifying one or more tire products to recommend to the user based on at least two pieces of the response information acquired by executing the first process multiple times; and output information indicating the vehicle use and the customer value estimated and information regarding the one or more tire products specified, wherein the second process includes determining a comprehension level of the user regarding a tire product, based on one or more pieces of the response information acquired, and determining question information to be output next time and thereafter, according to the comprehension level determined.

### (Advantageous Effect)

According to an embodiment of the present disclosure, a technique of recommending an automotive tire product to a customer is improved.

### BRIEF DESCRIPTION OF THE DRAWINGS

In the accompanying drawings:
FIG. 1 is a block diagram illustrating a schematic configuration of a system according to an embodiment of the present disclosure;
FIG. 2 illustrates an example of a flowchart of presenting questions to a user;
FIG. 3 illustrates an example of a screen displayed on a terminal device;
FIG. 4 is a block diagram illustrating a schematic configuration of a terminal device;
FIG. 5 is a block diagram illustrating a schematic configuration of an information processing device;
FIG. 6 is a flowchart illustrating operation of a terminal device; and
FIG. 7 illustrates inputs and outputs of a machine learning model according to a variation of an embodiment.

### DETAILED DESCRIPTION

An embodiment of the present disclosure is described below.

### (Embodiment overview)

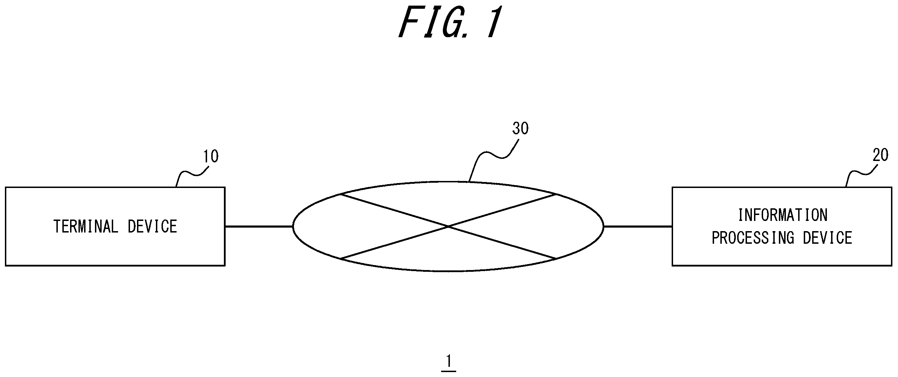

An overview of a system 1 according to an embodiment of the present disclosure is described below, with reference to FIG. 1. The system 1 includes a terminal device 10 and an information processing device 20. The terminal device 10 and the information processing device 20 are communicatively connected to a network 30 that includes, for example, the Internet.

The terminal device 10 is any device used by a user. For example, a general-purpose computer such as a smartphone or tablet terminal, or a dedicated computer may be employed as the terminal device 10.

The information processing device 20 may be a server device, for example, and may be any computer. The information processing device 20 is able to communicate with the terminal device 10 via the network 30.

According to the present embodiment, as an overview, questions are sequentially presented to a user from the terminal device 10. The user may answer the questions in sequence using the terminal device 10. Based on responses given by the user, vehicle use and customer value for the user are estimated, and a recommended tire product is specified. The user may be informed of estimated vehicle use, customer value, and recommended tire product information.

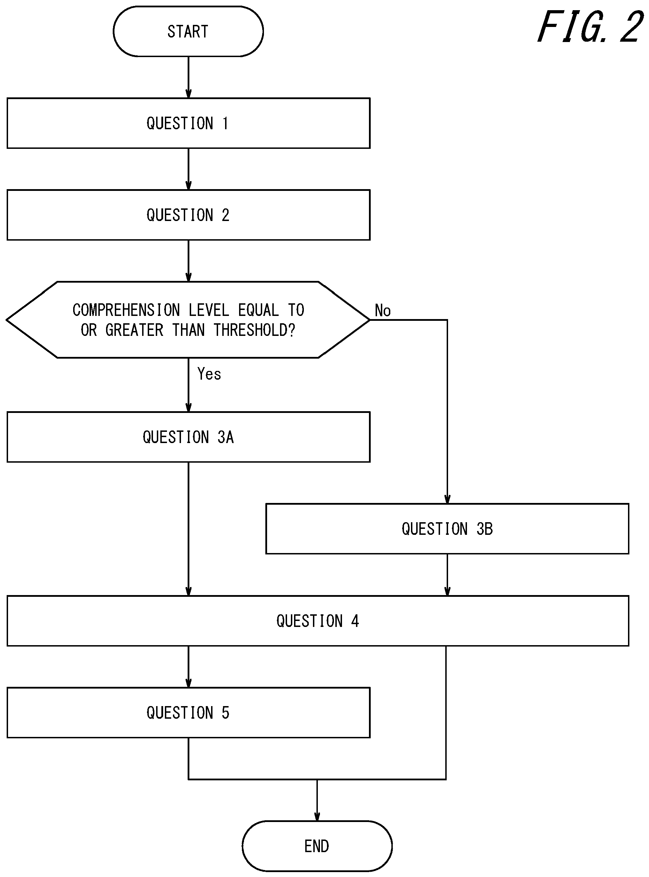

FIG. 2 illustrates an example of a flowchart of presenting questions to the user. In this example, "QUESTION 1" and "QUESTION 2" are first presented to the user sequentially. The user's comprehension level regarding a tire product is then determined based on the responses to at least one of "QUESTION 1" and "QUESTION 2", for example. Then, content and number of subsequent questions are changed according to the comprehension level determined. In this example, when the comprehension level is equal to or greater than a threshold (in other words, when the user's understanding of the tire product is relatively high), "QUESTION 3A", "QUESTION 4", and "QUESTION 5" are presented to the user sequentially. On the other hand, when the comprehension level is below the threshold (in other words, when the user's understanding of the tire product is relatively low), "QUESTION 3B" and "QUESTION 4" are presented to the user sequentially. "QUESTION 3A" and "QUESTION 5", which are presented only when the comprehension level is equal to or greater than the threshold, could be questions that, for example, require a certain level of knowledge about the tire product to answer (for example, knowledge of specifications of the tire product). For example, a question asking for specifications such as size, material, type, or tread pattern type of the tire product that the user wishes to purchase may be employed as "QUESTION 3A" and "QUESTION 5". On the other hand, "QUESTION 3B", which is presented only when the comprehension level is below the threshold, could be a question that may be answered without knowledge of the tire product. For example, a question such as asking what is important in driving a car may be employed as "QUESTION 3B".

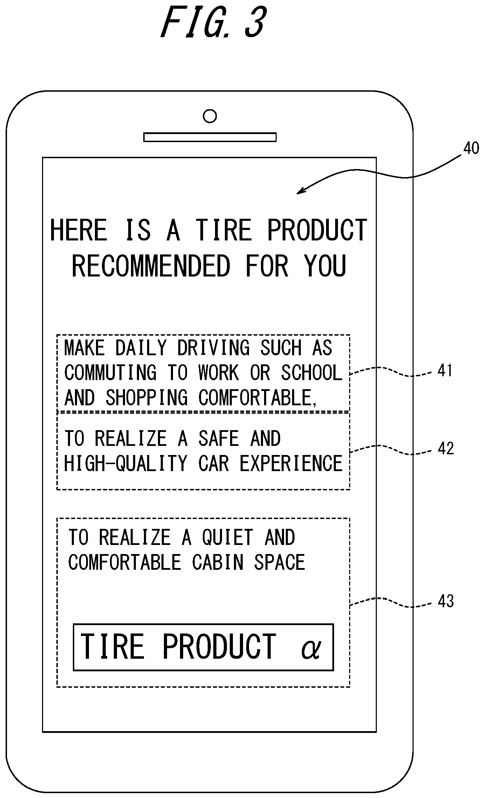

FIG. 3 illustrates an example of a screen 40 displayed on the terminal device 10. Information 41 indicating an estimated vehicle use, information 42 indicating an estimated customer value, and information 43 regarding one or more tire products specified are output to the screen 40. In the example illustrated in FIG. 3, the estimated vehicle use is "DAILY DRIVING SUCH AS COMMUTING TO WORK OR SCHOOL AND SHOPPING". The estimated customer value is "SAFE AND HIGH-QUALITY CAR EXPERIENCE". The specified tire product is "TIRE PRODUCT α".

First, an overview of the embodiment is described, and details follow. The terminal device 10 executes a first process multiple times. The first process includes outputting question information to a user and obtaining response information to the question information from the user. The terminal device 10 executes the second process at least once while executing the first process multiple times. The second process includes determining the user's comprehension level regarding the tire product based on one or more pieces of the response information already acquired, and determining question information to be output next time and thereafter according to the comprehension level determined. The terminal device 10 executes the third process based on two or more pieces of the response information acquired by executing the first process multiple times. The third process includes specifying one or more tire products to recommend to the user as well as estimating vehicle use and customer value for the user. The terminal device 10 then outputs information indicating the estimated vehicle use and the estimated customer value, and information regarding the one or more tire products specified.

According to the present embodiment, questions are asked according to the user's comprehension level, the vehicle use and customer value for the user are estimated from responses to the questions, and the tire product to be recommended to the user is specified. For example, a question that may be answered without knowledge of a tire product (for example, "QUESTION 3B" in FIG. 2) may be asked to a user that has a relatively low comprehension level, while a question that requires a certain level of knowledge of a tire product to answer (for example, "QUESTION 3A" and QUESTION 5" in FIG. 2) may be asked to a user that has a relatively high comprehension level. Accordingly, a technique for recommending an automotive tire product to a customer is improved, in that the vehicle use and customer value for the user can be estimated with improved accuracy based on the user's responses, and a more appropriate tire product may be recommended.

Next, each element of the system 1 is described in detail.

### (Configuration of terminal device)

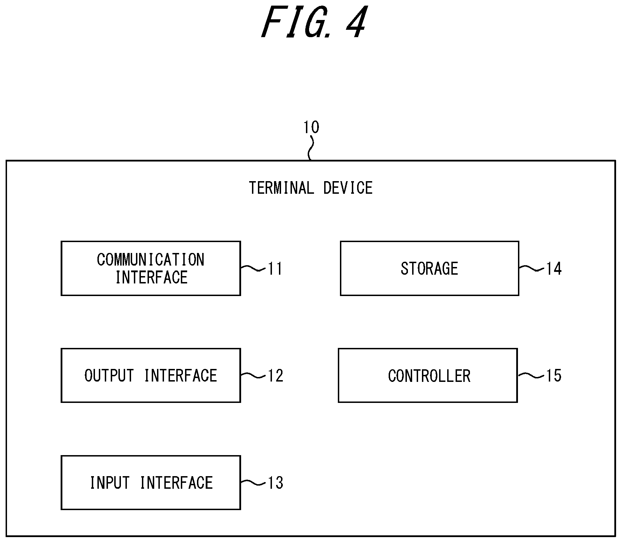

As illustrated in Figure 4, the terminal device 10 includes a communication interface 11, an output interface 12, an input interface 13, a memory 14, and a controller 15.

The communication interface 11 includes one or more interfaces for communication that are operable to connect to the network 30. The one or more interfaces for communication may be compatible with any communication standard, including but not limited to mobile communication standards such as 4th Generation (4G), 5th Generation (5G), a wired local area network (LAN) standard, and a wireless LAN standard, for example. According to the present embodiment, the terminal device 10 communicates with the information processing device 20 via the communication interface 11 and the network 30. The communication interface 11 may also include a receiver for a satellite positioning system such as the Global Positioning System (GPS), for example. In such a case, the terminal device 10 may acquire location information based on information received via the receiver.

The output interface 12 may include one or more output devices that output information to notify the user. Such output devices include, but are not limited to, a display that outputs information as an image, or a speaker that outputs information as sound. The output interface 12 may include an interface for connecting an external output device.

The input interface 13 may include one or more input devices that detect user input. Such input devices include, but are not limited to, a physical key, a capacitive key, a touch screen integrated with the display, a microphone that accepts voice input, and a camera. The input interface 13 may include an interface for connecting an external input device.

The memory 14 includes at least one memory. Here, memory includes but is not limited to semiconductor memory, magnetic memory, and optical memory. Each memory included in the memory 14 may function, for example, as a main memory, an auxiliary memory, or a cache memory. The memory 14 stores any information used in operation of the terminal device 10. For example, the memory 14 may store a system program, an application program, embedded software, and the like.

The controller 15 includes one or more processors, one or more programmable circuits, one or more dedicated circuits, or any combination thereof. Processors include, but are not limited to, a general-purpose processor such as a central processing unit (CPU) or a graphics processing unit (GPU), and a dedicated processor specialized for specific processing. Programmable circuits include, but are not limited to, a field-programmable gate array (FPGA). Dedicated circuits include, but are not limited to, an application specific integrated circuit (ASIC). The controller 15 controls operation of the terminal device 10 as a whole.

### (Information processing device configuration)

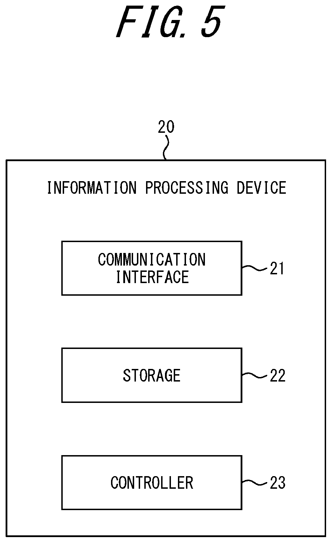

As illustrated in FIG. 5, the information processing device 20 includes a communication interface 21, a memory 22, and a controller 23.

The communication interface 21 includes one or more interfaces for communication that are operable to connect to the network 30. The one or more interfaces for communication may be compatible with any communication standard, including but not limited to a mobile communication standard, a wired LAN standard, and a wireless LAN standard, for example. According to the present embodiment, the information processing device 20 communicates with the terminal device 10 via the communication interface 21 and the network 30.

The memory 22 includes at least one memory. Each memory included in the memory 22 may function, for example, as a main memory, an auxiliary memory, or a cache memory. The memory 22 stores any information used in operation of the information processing device 20. For example, the memory 22 may store a system program, an application program, a database, and the like.

The controller 23 includes one or more processors, one or more programmable circuits, one or more dedicated circuits, or any combination thereof. The controller 23 controls operation of the information processing device 20 as a whole.

### (Terminal device operation flow)

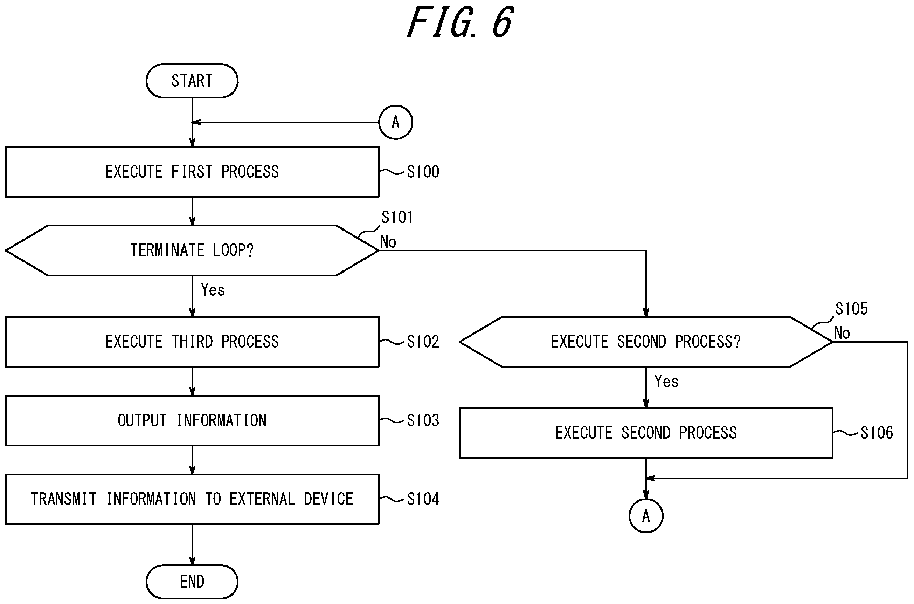

Operation of the terminal device 10 is described with reference to FIG. 6. The operation may be performed, for example, via a dedicated application program stored in the terminal device 10 and via a general-purpose web browser application. Information used in each step may be acquired from the information processor 20 via the network 30, for example, or may be stored in advance in the memory 14 of the terminal device 10.

Step S 100: the controller 15 of the terminal device 10 executes the first process. The first process includes outputting question information to the user and acquiring the response information to the question information from the user.

Specifically, the controller 15 outputs the question information to the output interface 12. The output interface 12 outputs the question information as video or audio. The question information may include, but is not limited to, information asking the user for information such as the user's gender, age, or generation, family members living with the user, make and model (category and name) of vehicle currently in use, mileage per defined time period, and whether desired tire performance is clear when selecting a tire product. As described below, step S100 is repeated multiple times, but the question information output in step S100 at least the first time is information indicating a question that may be answered without knowledge of a tire product.

The controller 15 then acquires from the input interface 13 the response information input by the user. The response information may be, for example, information indicating one or more options selected by the user from among multiple options prepared in advance, may be text information in natural language, and may be information indicating a result of recognizing the text information by natural language processing.

Step S101: the controller 15 determines whether to terminate a processing loop. When a determination is made to terminate the loop (step S101 - Yes), processing proceeds to step S102. On the other hand, when a determination is made to not terminate the loop (step S101 - No), processing proceeds to step S105.

Specifically, the controller 15 determines whether or not a defined termination condition is met, and when the termination condition is met, determines that the loop is to be terminated. The termination condition may be, but is not limited to, a condition that acquisition of the response information for all the question information presented to the user has been completed. According to the present embodiment, the question information presented to the user varies depending on whether the user's comprehension level regarding a tire product is equal to or greater than a threshold. For example, in the example illustrated in FIG. 2, when the user's comprehension level is equal to or greater than the threshold, the question information defined as being presented to the user is five questions "QUESTION 1", "QUESTION 2", "QUESTION 3A", "QUESTION 4", and "QUESTION 5". The controller 15 determines that the loop is to be terminated when acquisition of response information for the five questions is complete, and determines that the loop is not to be terminated when the acquisition of the response information for the five questions is not complete. On the other hand, when the user's comprehension level is below the threshold, the question information defined as being presented to the user is four questions "QUESTION 1", "QUESTION 2", "QUESTION 3A", and "QUESTION 4". The controller 15 determines that the loop is to be terminated when acquisition of response information for the four questions is complete, and determines that the loop is not to be terminated when the acquisition of the response information for the four questions is not complete. However, the embodiment is not limited to the example illustrated in FIG. 2, and step S 100 may be executed multiple times.

Step S102: on determining that the loop is to be terminated in step S101 (step S101 - Yes), the controller 15 executes a third process based on two or more pieces of the response information acquired by executing the first process multiple times. The third process includes specifying one or more tire products to recommend to the user as well as estimating vehicle use and customer value for the user.

Any method may be employed to execute the third process. For example, according to the present embodiment, a rule-based approach is used. Specifically, the controller 15 may store information indicating the vehicle use, the customer value, and the recommended tire product in the memory 14 in advance for each combination of response content indicated by at least two pieces of the response information. Specifically, for example, when each of the two pieces of the response information may indicate "1", "2", or "3", there are 3 × 3 = 9 possible patterns of the response content for the two pieces of the response information. In such a case, the memory 14 stores information indicating the vehicle use, the customer value, and the recommended tire product for each of the nine patterns. The controller 15 may acquire from the memory 14 the information indicating the vehicle use, the customer value, and the recommended tire product corresponding to a combination of the response content indicated by the two or more pieces of the response information acquired.

Here, the controller 15 may execute the third process based on both the two or more pieces of the response information acquired by executing the first process multiple times and other information that is different from the response information. The other information may include, but is not limited to, inventory information at a tire product dealership and identification information of a tire product that a dealership would like to prioritize for sale. The other information may be acquired via the network 30 and from a computer used by a tire product dealership, for example. For example, the controller 15 may specify a plurality of tire products to recommend to the user, the plurality of tire products including, for example, a tire product corresponding to the combination of the response content indicated by the acquired two or more pieces of the response information, a tire product with a large or small inventory, and a tire product that a dealership would like to prioritize for sale. According to this configuration, circumstances of a dealership may be reflected when specifying a tire product to recommend to the user.

The response information used for the third process may be all the pieces of the response information corresponding to the pieces of the question information (that is, all response information obtained as a result of the first process being executed multiple times), or some of the pieces of the response information, as long as two or more pieces of the response information are used.

Step S103: the controller 15 outputs the information indicating the vehicle use and the customer value estimated in step S 102 and the information regarding the one or more tire products specified.

Specifically, the controller 15 outputs each piece of information to the output interface 12. The output interface 12 outputs each piece of information as video or audio. For example, in the example illustrated in FIG. 3, the information 41 indicating the vehicle use, the information 42 indicating the customer value, and the information 43 regarding the tire product are output to the screen 40 displayed on a display of the output interface 12. The information 43 regarding the tire product may include, but is not limited to, information indicating the name of the tire product, information indicating performance of the tire product and a reason for recommending the tire product, and information (for example, a uniform resource locator (URL)) of a dealership or Internet store where the tire product is available. Where there are multiple dealerships from which the tire product is available, information on one or more dealerships selected from among the multiple dealerships (for example, one or more dealerships whose distance from a location indicated by the location information of the terminal device 10 or location information specified by the user is less than a threshold value) may be included in the information 43 regarding the tire product. Here, a mode of expression of each piece of information output may differ depending on whether the user's comprehension level regarding the tire product is below the threshold value or not. Typically, when the user's comprehension level is below the threshold, fewer expressions are used to describe the specifications of the tire product than when the comprehension level is equal to or above the threshold.

Step S104: the controller 15 transmits user identification information (for example, the user's name or membership number) and the identification information of one or more tire products specified in step S102 to an external device.

The external device may be, for example, a computer used by a tire product dealership. The controller 15 may, for example, transmit the user identification information and the tire product identification information to the dealership's computer indicated in the information 43 output in step S103, as well as perform a procedure to make an appointment to visit the dealership. The procedure for making an appointment for a store visit may be performed, for example, by sending and receiving information between the terminal device 10 and the dealership's computer indicating times when an appointment may be made and a schedule of store visit times desired by the user. In such a case, an employee of the dealership may refer to the information received from the terminal device 10 to smoothly respond to the user when the user visits the store. Alternatively, the external device may be a computer used by an Internet store operator. The controller 15 may, for example, transmit the user identification information and the tire product identification information to the computer used by the Internet store operator indicated in the information 43 output in step S 103, as well as perform a procedure to purchase the tire product. The procedure to purchase may be performed, for example, by sending and receiving information necessary for an electronic payment procedure using, for example, a credit card, electronic money, or a cryptographic asset between the terminal device 10, the computer of the operator, and a defined electronic payment server. In such a case, the user may purchase a tire product via a web-based procedure. However, the external device is not limited to the above examples and may be any device. Information may be transmitted to the external device, for example, via the communication interface 11 and the network 30, but is not limited to this example, and may be transmitted by any method. For example, the controller 15 may transmit information by displaying a two-dimensional code on a display of the output interface 12 and having a code scanner of an external device read the two-dimensional code. For example, when the terminal device 10 itself is a computer used by a dealership, step S104 may be omitted.

Step S105: when a determination is made to not terminate the loop in step S101 (step S101 - No), the controller 15 determines whether or not to execute a second process. The second process includes determining the user's comprehension level regarding the tire product based on the one or more pieces of the response information already acquired, and determining question information to be output next time and thereafter according to the comprehension level determined. When a determination is made to execute the second process (step S105 - Yes), processing proceeds to step S106. On the other hand, when a determination is made to not execute the second process (step S105 - No), processing returns to step S100.

Specifically, the controller 15 determines whether or not a defined condition is met, and when the condition is met, determines that the second process is to be executed. The condition may be, but is not limited to, a condition that acquisition of the response information for all the question information required to determine a user's comprehension level regarding the tire product has been completed. For example, in the example illustrated in FIG. 2, the second process is executed when the acquisition of response information for "QUESTION 1" and "QUESTION 2" is completed.

Step S106: When a determination is made in step S105 to execute the second process (step S105 - Yes), the controller 15 executes the second process. Processing then returns to step S100.

Specifically, the controller 15 determines the user's comprehension level regarding a tire product based on the one or more pieces of the response information already acquired, and determines question information to be output next time and thereafter according to the comprehension level determined. Any method may be employed to determine the comprehension level. For example, the controller 15 may assign a score based on a defined algorithm to the content of each piece of acquired response information and acquire a total score as the comprehension level of the user. Here, a higher total score indicates a higher level of user understanding of the tire product. The controller 15 determines that the user's understanding of the tire product is high when the comprehension level is equal to or greater than a defined threshold value, and determines that the user's understanding of the tire product is low when the comprehension level is below the threshold value. Multiple thresholds of different values may be used to determine how much or how little the user understands.

The controller 15 then determines the question information to be output next time and thereafter, according to the user's comprehension level. For example, in the example illustrated in FIG. 2, when the controller 15 determines that the comprehension level is equal to or higher than the threshold, "QUESTION 3A", "QUESTION 4", and "QUESTION 5" are determined as question information to be output next time and thereafter. On the other hand, when the controller 15 determines that the comprehension level is less than the threshold, "QUESTION 3B" and "QUESTION 4" are determined as question information to be output next time and thereafter.

As described above, the terminal device 10 according to the present embodiment executes the first process multiple times. The first process includes outputting question information to the user and acquiring the response information to the question information from the user. The terminal device 10 executes the second process at least once while executing the first process multiple times. The second process includes determining the user's comprehension level regarding the tire product based on the one or more pieces of the response information already acquired, and determining question information to be output next time and thereafter according to the comprehension level determined. The terminal device 10 executes the third process based on two or more pieces of the response information acquired by executing the first process multiple times. The third process includes specifying one or more tire products to recommend to the user as well as estimating vehicle use and customer value for the user. The terminal device 10 then outputs information indicating the estimated vehicle use and the estimated customer value and information regarding the one or more tire products specified.

According to such a configuration, questions are asked according to the user's comprehension level, the vehicle use and customer value for the user are estimated from responses to the questions, and the tire product to be recommended to the user is specified. For example, a question that may be answered without knowledge of a tire product (for example, "QUESTION 3B" in FIG. 2) may be asked to a user that has a relatively low comprehension level, while a question that requires a certain level of knowledge of a tire product to answer (for example, "QUESTION 3A" and QUESTION 5" in FIG. 2) may be asked to a user that has a relatively high comprehension level. Accordingly, a technique for recommending an automotive tire product to a customer is improved, in that accuracy of estimating the vehicle use and customer value for the user from the user's responses is improved, and a more appropriate tire product may be recommended.

Although the present disclosure has been described based on the drawings and examples, it should be noted that a person skilled in the art may make modifications and alterations based on the present disclosure. Therefore, it should be noted that such modifications and alterations are included within the scope of the present disclosure. For example, functions and the like included in each component, step, and the like may be rearranged, and multiple components, steps, and the like may be combined into one or divided, as long as no logical inconsistency results.

For example, the disclosed embodiment may be modified such that the components and operation of the terminal device 10 are distributed across multiple computers that are able to communicate with each other. For example, a variation may be implemented in which the information processing device 20 executes some or all of the operations of the terminal device 10.

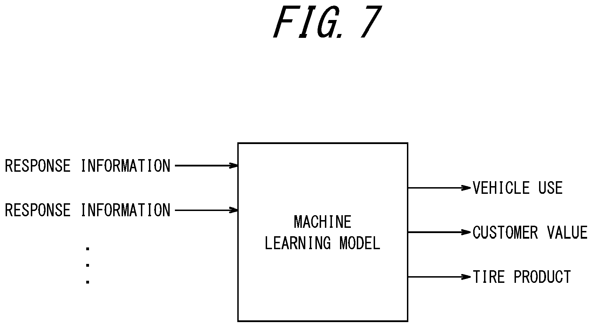

According to the disclosed embodiment, the third process may be executed using a machine learning model that outputs output information when input information is received. Specifically, the memory 14 of the terminal device 10 (or the memory 22 of the information processing device 20) stores, for example, the machine learning model illustrated in FIG. 7. The input information for the machine learning model includes two or more pieces of the response information acquired by executing the first process multiple times. According to such a configuration, use of an appropriately trained machine learning model may improve the estimation accuracy in the third process compared to a rule-based method as in the disclosed embodiment. The input information may further include other information that is different from the response information (for example, inventory information at the dealership of a tire product, identification information of a tire product that the dealership would like to prioritize for sale, and the like). The output information includes information indicating vehicle use and customer value for the user, and identification information of one or more tire products to be recommended to the user.

According to the above variation where the third process is executed using a machine learning model, the controller 15 of the terminal device 10 may acquire the identification information of a tire product that has actually been purchased by the user. The identification information may be acquired from the dealership's computer via the network 30, for example, and may be entered by the user or an employee of the dealership via the input interface 13. When the one or more tire products specified by the third process (for example, the one or more tire products recommended to the user) does not include a tire product that has actually been purchased by the user, then the controller 15 may train the machine learning model using the identification information of the tire product that has actually been purchased by the user as training data. According to this configuration, characteristics such as individual user preferences, for example, may be learned by the machine learning model, and accuracy of the output information may be improved.

According to the above variation where the third process is performed using the machine learning model, the output information of the machine learning model may further include information indicating, for example, user satisfaction with the tire product recommended. In such a case, the controller 15 of the terminal device 10 may acquire information indicating a user satisfaction level with the tire product, for example, from results of a questionnaire presented to the user after the purchase of the tire product. When there is a difference equal to or more than a defined threshold between a satisfaction level indicated in the output information of the machine learning model and the user satisfaction level acquired from the questionnaire results, the controller 15 may train the machine learning model using the information indicating the satisfaction level acquired from the questionnaire results as the training data. According to this configuration, accuracy of estimating user satisfaction with the recommended tire product may be improved.

Further, for example, a general-purpose computer may function as the terminal device 10 of the disclosed embodiment. Specifically, a program describing processing content to realize each function of the terminal device 10 according to the disclosed embodiment is stored in memory of the general-purpose computer, and the program is read and executed by a processor. Therefore, the disclosed embodiment may also be realized as a program executable by a processor or a non-transitory computer-readable medium storing the program.

### REFERENCE SIGNS LIST

- 1: System
- 10: Terminal device
- 11: Communication interface
- 12: Output interface
- 13: Input interface
- 14: Storage
- 15: Controller
- 20: Information processing device
- 21: Communication interface
- 22: Storage
- 23: Controller
- 30: Network
- 40: Screen
- 41: Information indicating vehicle use
- 42: Information indicating customer value
- 43: Information regarding tire product

## Claims

1. A method executed by a computer, the method comprising:
executing multiple times a first process of outputting question information to a user and acquiring response information to the question information from the user;
executing a second process at least once while executing the first process multiple times;
executing a third process of estimating a vehicle use and customer value for the user and specifying one or more tire products to recommend to the user based on two or more pieces of the response information acquired by executing the first process multiple times; and
outputting information indicating the vehicle use and the customer value estimated and information regarding the one or more tire products specified,
wherein the second process includes determining a comprehension level of the user regarding a tire product, based on one or more pieces of the response information acquired, and determining question information to be output next time and thereafter, according to the comprehension level determined.

2. The method according to claim 1, further comprising
transmitting user identification information and identification information of the one or more tire products specified to an external device.

3. The method according to claim 1 or 2, wherein
the third process is executed using a machine learning model that outputs output information when input information is received,
the input information includes the two or more pieces of the response information acquired by executing the first process multiple times, and
the output information includes information indicating a vehicle use and customer value for a user, and identification information of the one or more tire products to recommend to the user.

4. The method according to claim 3, further comprising,
when the one or more tire products to recommend to the user do not include a tire product that has been purchased by the user, training the machine learning model using identification information of the tire product that has been purchased by the user as training data.

5. The method according to any one of claims 1 to 4, wherein
the third process is executed based on the two or more pieces of the response information acquired by executing the first process multiple times and other information that is different from the response information.

6. A computer comprising a controller, wherein
the controller is configured to:
execute multiple times a first process of outputting question information to a user and acquiring response information to the question information from the user;
execute a second process at least once while executing the first process multiple times;
execute a third process of estimating a vehicle use and customer value for the user and specifying one or more tire products to recommend to the user based on two or more pieces of the response information acquired by executing the first process multiple times; and
output information indicating the vehicle use and customer value estimated and information regarding the one or more tire products specified,
wherein the second process includes determining a comprehension level of the user regarding a tire product, based on one or more pieces of the response information acquired, and determining question information to be output next time and thereafter, according to the comprehension level determined.

7. A system comprising a terminal device and an information processing device, wherein
the terminal device or the information processing device is configured to:
execute multiple times a first process of outputting question information to a user and acquiring response information to the question information from the user;
execute a second process at least once while executing the first process multiple times;
execute a third process of estimating a vehicle use and customer value for the user and specifying one or more tire products to recommend to the user based on at least two pieces of the response information acquired by executing the first process multiple times; and
output information indicating the vehicle use and the customer value estimated and information regarding the one or more tire products specified,
wherein the second process includes determining a comprehension level of the user regarding a tire product, based on one or more pieces of the response information acquired, and determining question information to be output next time and thereafter, according to the comprehension level determined.
